# EUROPÄISCHE PATENTSCHRIFT

(11) **EP 3 104 350 B1**
(45) Veröffentlichungstag und Bekanntmachung des Hinweises auf die Patenterteilung: **03.05.2017**
(21) Anmeldenummer: 15171599.2
(22) Anmeldetag: 11.06.2015
(51) Int. Cl.: G08B 13/196

(54) **ÜBERWACHUNGSKAMERA ZUR INSTALLATION AN EINEM BAUKÖRPER MIT EINEM INSBESONDERE AUF PUTZ ANBRINGBAREN BEFESTIGUNGSGEHÄUSE**
MONITORING CAMERA FOR INSTALLATION ON A STRUCTURE WITH A FIXING HOUSING, PARTICULARLY ONE FOR SURFACE MOUNTING
CAMERA DE SURVEILLANCE A INSTALLER SUR UN CORPS DE BATIMENT DOTEE D'UN BOITIER DE FIXATION POUVANT ETRE MONTE EN PARTICULIER EN SURFACE

(43) Veröffentlichungstag der Anmeldung: 14.12.2016
(73) Patentinhaber: Mobotix AG, 67722 Langmeil (DE)
(72) Erfinder: PFIFFI, Horst, 66851 Queidersbach (DE)
(74) Vertreter: advotec.

(56) Entgegenhaltungen:
- DE-U1-202015 102 154
- US-A- 6 093 044
- US-A1- 2002 054 234
- US-A1- 2006 050 150
- US-A1- 2007 126 871
- US-A1- 2008 211 913
- US-A1- 2013 114 950

## Beschreibung

Die Erfindung betrifft eine Überwachungskamera zur Installation an einem Baukörper nach dem Oberbegriff des Anspruchs 1.

Gattungsgemäße Überwachungskameras, insbesondere digitale Netzwerkkameras, sind aus dem Stand der Technik bekannt und ihre Nutzung weit verbreitet. Die Überwachungskameras werden im Freien, beispielsweise an Häusern oder Masten, befestigt. Auch im Innenbereich, an Wänden von Fluren und Treppenhäusern oder in der Nähe von Ein- oder Ausgängen von Büros und Geschäften, werden Überwachungskameras platziert. Dabei sind Überwachungskameras bekannt, bei denen das Kameragehäuse mit einer so genannten Aufputzmontage unter Zuhilfenahme eines separaten Befestigungsgehäuses am Baukörper befestigt wird. Eine Überwachungskamera zur Aufputzmontage ist beispielsweise aus der DE 10 2008 049 872 A1 bekannt. Auch aus der DE 10 2008 062 997 A1 ist eine Überwachungskamera zur Aufputzmontage bekannt.

Bei den bekannten Überwachungskameras zur Aufputzmontage wird zunächst das Befestigungsgehäuse an der Außenseite, d.h. auf Putz, in der vorgesehenen Position des Gebäudekörpers montiert und danach die Überwachungskamera am Befestigungsgehäuse befestigt. Nach der Anordnung der Überwachungskamera im Befestigungsgehäuse wird über den Rand des Befestigungsgehäuses und unter Fixierung der Überwachungskamera eine zusätzliche Abdeckung angebracht, die zum einen das unbeabsichtigte Lösen der Überwachungskamera aus dem Befestigungsgehäuse verhindert, zum anderen mögliche Fugen und konstruktiv notwendige Halteelemente optisch ansprechend überdeckt.

Nachteilig an derartig mehrteiligen Befestigungseinrichtungen zur Fixierung des Kameragehäuses im Befestigungsgehäuse sind der hohe Aufwand bei der Montage und die kostenträchtige Herstellung der verschiedenen Bauteile. Weiterhin nachteilig ist es, dass die Montage bzw. Demontage der Überwachungskamera, bei der das Kameragehäuse beispielsweise zu Wartungszwecken aus dem Befestigungsgehäuse entnommen werden muss, nicht werkzeuglos durchführbar ist.

Die US 2007/0126871 A1 beschreibt eine Überwachungskamera mit einem Kameragehäuse, das werkzeuglos an einem Kameragehäuse montiert und demontiert werden kann. Die Montage bzw. die Demontage erfolgt dabei durch Drehung des Kameragehäuses relativ zum Befestigungsgehäuse um die Hochachse. Befestigungshaken mit seitlich überstehender Fixierkontur können durch das Drehen des Kameragehäuses relativ zum Befestigungsgehäuse ein- bzw. ausgerastet werden. Nachteilig an dieser, da die zur Drehung des Kameragehäuses notwendigen Kräfte am Umfang des Kameragehäuses aufgebracht werden müssen

Die US 6,093,044 beschreibt einen Befestigungsmechanismus zur Befestigung eines Gehäuses an einer Basis. Die Basis umfasst dabei elastisch gelagerte Rastarme, die in dem Hinterschnitt der Basis einrastbar sind. Durch seitlichen Druck auf die Rastarme kann das Gehäuse werkzeuglos von der Basis demontiert werden. Auch diese Art der Befestigung ist unhandlich, da mehrere Rastarme gleichzeitig ausgerastet und gleichzeitig das Gehäuses abgezogen werden muss, um das Gehäuse zu öffnen.

Aufgabe der vorliegenden Erfindung ist es deshalb, eine Überwachungskamera zur Befestigung in einem Befestigungsgehäuse vorzuschlagen, das aus einfachen Bauteilen gebildet wird und zudem eine einfache und werkzeuglose Montage bzw. Demontage des Kameragehäuses an dem Befestigungsgehäuse erlaubt.

Diese Aufgabe wird durch eine Überwachungskamera mit Befestigungsgehäuse nach der Lehre des Anspruchs 1 gelöst.

Vorteilhafte Ausführungsformen der Erfindung sind Gegenstand der Unteransprüche.

Die erfindungsgemäße Überwachungskamera ist zunächst dadurch charakterisiert, dass am Befestigungsgehäuse eine vom Baukörper wegweisende Öffnung vorgesehen ist, durch die das Kameragehäuse bei der Montage in das Befestigungsgehäuse eingeführt werden kann. Am Kameragehäuse und/oder im Befestigungsgehäuse ist erfindungsgemäß zumindest ein selbsttätig wirkendes Fixierelement vorgesehen, mit dem das Kameragehäuse in einer definierten Funktionsstellung lösbar im Befestigungsgehäuse fixiert wird. Die selbsttätige Wirkung des Fixierelements ist dabei dahingehend zu verstehen, dass die Fixierung des Kameragehäuses am Befestigungsgehäuse alleine dadurch realisiert wird, dass der Monteur das Kameragehäuse in die dafür vorgesehene Öffnung des Befestigungsgehäuses einführt, bis das Kameragehäuse die vordefinierte Funktionsstellung im Befestigungsgehäuse erreicht hat. Insbesondere sind die selbsttätig wirkenden Fixierelemente so zu gestalten, dass die Verwendung von Werkzeugen bei der Montage des Kameragehäuses im Befestigungsgehäuse nicht notwendig ist.

Aufgabe der Erfindung ist es weiterhin auch, eine werkzeuglose Demontage des Kameragehäuses aus dem Befestigungsgehäuse zu realisieren. Da die Fixierelemente zur Fixierung des Kameragehäuses im Befestigungsgehäuse selbsttätig wirken, sind dazu besondere Maßnahmen zu treffen. Erfindungsgemäß ist es deshalb vorgesehen, dass das Kameragehäuse nach Erreichen seiner Funktionsstellung nicht vollständig arretiert ist. Vielmehr ist die Fixierung des Kameragehäuses in der Funktionsstellung am Befestigungsgehäuse derart ausgestaltet, dass nach Erreichen der Funktionsstellung weiterhin eine Verstellung des Kameragehäuses von der Funktionsstellung in eine Demontagestellung möglich ist. Die Verstellung zwischen Funktionsstellung und Demontagestellung erfolgt dabei durch Aufbringung einer Druckkraft an der Vorderseite des Kameragehäuses. Dies bedeutet also mit anderen Worten, dass der Benutzer bei der Demontage des Kameragehäuses aus dem Befestigungsgehäuse zunächst eine Druckkraft auf der Vorderseite des Kameragehäuses aufbringen muss. Durch diese Druckkraft wird dann das Kameragehäuse von der Funktionsstellung in die Demontagestellung verstellt.

Die Demontagestellung des Kameragehäuses im Befestigungsgehäuse ist dadurch charakterisiert, dass zumindest ein Fixierelement außer Eingriff gebracht ist und/oder an der Außenseite des Kameragehäuses eine Griffkontur zur Aufbringung einer manuellen Zugkraft zugänglich gemacht wird. Durch das Außereingriffbringen zumindest eines Fixierelements bzw. durch die Schaffung einer Griffkontur zur Aufbringung einer manuellen Zugkraft ist es dann für den Benutzer problemlos möglich ohne Verwendung von Werkzeugen das Kameragehäuse aus der Öffnung des Befestigungsgehäuses herauszuziehen und die gewünschte Demontage zu erreichen.

Im Hinblick auf die Verstellung des Kameragehäuses zwischen Funktionsstellung und Demontagestellung weist der Anlagebund erfindungsgemäß einen zur Öffnung des Befestigungsgehäuses weisenden Rücksprung auf. Dies bedeutet mit anderen Worten, dass der Blendrand des Kameragehäuses in der Funktionsstellung nicht entlang des gesamten Umfangs an der zur Öffnung weisenden Seite des Anlagebunds anliegt, sondern entlang eines Teils des Umfangs, nämlich im Bereich des Rücksprungs, ein Abstand zwischen Blendrand und Anlagebund vorhanden ist. Soll nun das Kameragehäuse in die Demontagestellung verstellt werden, so bringt der Benutzer an der Vorderseite des Kameragehäuses die notwendige Druckkraft auf, und das Kameragehäuse wird in die Demontagestellung verstellt, wobei dabei der Abstand zwischen Blendrand und Anlagebund durchlaufen wird. Liegt dann der Blendrand des Kameragehäuses in der Demontagestellung zumindest abschnittsweise an der zur Öffnung des Befestigungsgehäuses weisenden Seite des Rücksprungs an, so ist in dieser Stellung zumindest ein Fixierelement außer Eingriff gebracht oder eine Griffkontur zur Aufbringung einer manuellen Zugkraft zugänglich.

Im Hinblick auf eine exakte Führung des Kameragehäuses bei der Verstellung zwischen Funktionsstellung und Demontagestellung ist es erfindungsgemäß vorgesehen, dass durch den Rücksprung eine zweite Anlageebene definiert wird, an der der Blendrand des Kameragehäuses in der Demontagestellung zumindest abschnittsweise zur Anlage kommt. Diese zweite den Rücksprung bildende Anlageebene ist dabei winkelig gegenüber der ersten Anlageebene geneigt anzuordnen. Ist nun das Kameragehäuse in der Funktionsstellung angeordnet, so bewirkt der Zwischenwinkel zwischen den beiden Anlageebenen, dass der notwendige Abstand zwischen dem Blendrand des Kameragehäuses und der zweiten Anlageebene des Anlagebunds vorhanden ist. Durch die Schnittlinie zwischen der ersten Anlageebene und der zweiten Anlageebene wird außerdem eine Kippkante definiert, um die das Kameragehäuse bei der Verstellung zwischen der Funktionsstellung und der Montagestellung gekippt wird. Bringt also der Benutzer zur Verstellung des Kameragehäuses in die Demontagestellung die notwendige Druckkraft an der Vorderseite des Kameragehäuses auf, so wird das Kameragehäuse um die Kippkante schwenkend verstellt, bis der Blendrand an der zweiten Anlageebene des Anlagebunds anliegt.

In welcher Weise die selbsttätig wirkenden Fixierelemente an der Überwachungskamera ausgebildet sind, ist grundsätzlich beliebig. Gemäß einer ersten Ausführungsform ist es vorgesehen, dass als selbsttätig wirkende Fixierelemente an der Rückseite des Kameragehäuses zumindest zwei schwenkbar gelagerte Haltearme vorgesehen sind. Diese Haltearme können dabei zwischen einer radial über das Kameragehäuse überstehenden Fixierstellung und einer zurückgeschwenkten Montagestellung verschwenkt werden. Außerdem sind die Haltearme mit einer Vorspannkraft elastisch vorgespannt, wobei die Vorspannkraft die Haltearme jeweils in die radial überstehende Fixierstellung drückt. Zur Montage des Kameragehäuses im Befestigungsgehäuse können die Haltearme entgegen der Vorspannkraft in die Montagestellung verschwenkt und das Kameragehäuse in die Öffnung des Befestigungsgehäuses eingeführt werden. Sobald die Haltearme von den Fingern des Benutzers nicht mehr zurückgehalten werden, schwenken diese dann selbsttätig durch die Vorspannkraft in die Fixierstellung und Hintergreifen den Rand der Öffnung des Befestigungsgehäuses, um dadurch das Kameragehäuse im Befestigungsgehäuse lösbar zu fixieren.

Bei der Demontage solcher mit Haltearmen ausgestatteten Überwachungskameras erfolgt dann durch die Verstellung des Kameragehäuses von der Funktionsstellung in die Montagestellung eine Schwenkbewegung zumindest eines Haltearms in Richtung seiner zurückgeschwenkten Montagestellung. Sobald das Kameragehäuse dann die Demontagestellung erreicht hat, ist entweder einer der Haltearme soweit zurückgeschwenkt, dass der Hintergriff der Öffnung des Befestigungsgehäuses beendet wird, oder eine Griffkontur zur Aufbringung einer manuellen Zugkraft geschaffen ist. An dieser Griffkontur kann der Monteur dann das Kameragehäuse aus der Öffnung des Befestigungsgehäuses herausziehen und dadurch die Haltearme außer Eingriff bringen. Die Funktion und Ausgestaltung von Haltearmen zur Fixierung von Kameragehäusen wird beispielsweise auch in der DE 20 2015 102 154 U1, auf die hiermit ausdrücklich Bezug genommen wird, näher erläutert.

Alternativ zur Verwendung von schwenkbar gelagerten Haltearmen können als selbsttätig wirkende Fixierelemente am Kameragehäuse und/oder im Befestigungsgehäuse auch Rastelemente vorgesehen sein.

Diese Rastelemente sind dabei so anzuordnen und zu gestalten, dass bei Anordnung des Kameragehäuses in der Funktionsstellung im Befestigungsgehäuse eine gegenüberliegende Rastkontur form- und/oder kraftschlüssig hintergriffen wird, um die gewünschte selbsttätig wirkende Fixierung des Kameragehäuses im Befestigungsgehäuse zu realisieren. Durch solche Rastelemente ist es insbesondere möglich eine Fixierung des Kameragehäuses im Befestigungsgehäuse mit sehr geringem Bauraum zu realisieren, da beispielsweise die Haltearme zur Fixierung des Kameragehäuses einen entsprechend großen Schwenkbereich, durch den sie kollisionsfrei bewegt werden können, benötigen.

Konstruktiv ist es besonders vorteilhaft, wenn die Rastelemente als elastisch federnd gelagerte Rastarme ausgebildet sind, wobei am freien Ende der Rastarme eine Rastnase vorgesehen ist, die bei Anordnung des Kameragehäuses in der Funktionsstellung im Befestigungsgehäuse eine gegenüberliegende Rastkontur form- und/oder kraftschlüssig hintergreifen kann.

Ist das Kameragehäuse ausschließlich dazu vorgesehen mit den Rastelementen am Befestigungsgehäuse fixiert zu werden, ist es besonders kostengünstig, wenn die Rastelemente einstückig an das Kameragehäuse oder an das Befestigungsgehäuse angeformt sind. Dies kann insbesondere dadurch geschehen, dass die Rastelemente in einer Spritzgießform einstückig aus Kunststoff angespritzt werden.

Werden zur Bildung der erfindungsgemäßen Überwachungskamera Kameragehäuse verwendet, die auch gegebenenfalls mit anderen Fixiermitteln fixiert werden können, so ist es besonders vorteilhaft, wenn die Rastelemente nicht einstückig an das Kameragehäuse angeformt werden, sondern funktionsabhängig jeweils wahlweise am Kameragehäuse angebracht werden. Diese wahlweise Anbringung der Rastelemente am Kameragehäuse kann bevorzugt durch Verwendung eines Adapterrings erfolgen. Die Rastelemente selbst sind an dem Adapterring angeformt und der Adapterring kann dann wahlweise am Kameragehäuse und/oder am Befestigungsgehäuse festgelegt werden. Insbesondere ist es vorteilhaft, wenn der Adapterring am Kameragehäuse oder am Befestigungsgehäuse einrastbar ist. Durch die Kombination des Adapterrings mit einem Standard-Kameragehäuse oder einem Standard-Befestigungsgehäuse kann erreicht werden, dass das Standard-Kameragehäuse oder das Standard-Befestigungsgehäuse zur Bildung einer erfindungsgemäßen Überwachungskamera verwendet werden kann.

Um die erfindungsgemäß vorgesehene Verstellbarkeit des Kameragehäuses zwischen der vordefinierten Funktionsstellung, in der der Standardbetrieb der Überwachungskamera erfolgt, und der Demontagestellung, in der zumindest ein Fixierelement außer Eingriff gebracht ist bzw. eine Griffkontur zur Aufbringung einer manuellen Zugkraft zugängig gemacht wird, zu realisieren, gibt es eine Vielzahl von konstruktiven Möglichkeiten. Besonders einfach und kostengünstig kann die Verstellung zwischen Funktionsstellung und Demontagestellung realisiert werden, wenn am Innenumfang des Befestigungsgehäuses ein Anlagebund vorgesehen ist. Dieser Anlagebund ist dabei zunächst dadurch charakterisiert, dass die zur Öffnung des Befestigungsgehäuses weisende Seite des Anlagebunds eine Anlageebene definiert, an der das Kameragehäuse in der Funktionsstellung zumindest abschnittsweise mit einem radial überstehenden Blendrand zur Anlage kommen kann. Dies bedeutet mit anderen Worten, dass bei der Montage des Kameragehäuses dieses zunächst durch die Öffnung des Befestigungsgehäuses eingeführt und dann soweit nachgeschoben wird, bis der Blendrand des Kameragehäuses an der zur Öffnung weisenden Seite des Anlagebunds anliegt. Spätestens mit Anlage des Blendrands am Anlagebund muss dann die selbsttätig wirkende Fixierung des Kameragehäuses im Befestigungsgehäuse durch die Fixierelemente realisiert sein.

Um eine zuverlässige und einfache Fixierung des Kameragehäuses im Befestigungsgehäuse zu realisieren, ist es besonders vorteilhaft, wenn der Anlagebund am Innenumfang des Befestigungsgehäuses einen geschlossenen Ring bildet. Dadurch ist es gewährleistet, dass auch beim Verdrehen des Kameragehäuses relativ zum Befestigungsgehäuse um die Hochachse jederzeit und ohne spezielle Ausrichtung eine Fixierung der Rastelemente an der von der Öffnung des Befestigungsgehäuses wegweisenden Seite durch entsprechenden Hintergriff realisiert werden kann.

Um das Ausrasten der Rastelemente bei der Verstellung des Kameragehäuses von der Funktionsstellung in die Demontagestellung zu erleichtern, kann an der von der Öffnung des Befestigungsgehäuses wegweisenden Seite des Anlagebunds eine Abrundung oder Anfasung vorgesehen sein. Diese Abrundung oder Anfasung wird dann von den Rastelementen, beispielsweise von den an den Rastarmen angeordneten Rastnasen, kraftschlüssig hintergriffen und so die gewünschte Fixierung des Kameragehäuses realisiert. Aufgrund des nicht vorhandenen Formschlusses zwischen den Rastelementen einerseits und der Rastkontur am Anlagebund andererseits wird erreicht, dass bei der Verstellung des Kameragehäuses ausgehend von der Funktionsstellung in die Demontagestellung keine unerwünscht hohen Druckkräfte an der Vorderseite des Kameragehäuses aufgebracht werden müssen.

Um das Einführen des Kameragehäuses in das Befestigungsgehäuse bei Verwendung von Rastelementen zu erleichtern, ist es besonders vorteilhaft, wenn am freien Ende der Rastelemente jeweils eine Anlaufschräge vorgesehen ist. Diese Anlaufschräge ermöglicht es, dass die Rastelemente beim Einführen des Kameragehäuses in das Befestigungsgehäuse am Anlagebund mit der Anlaufschräge abgleiten. Dabei wird außerdem eine nach innen gerichtete Kraft auf das freie Ende der Rastelemente bewirkt, so dass die Rastelemente mit ihrem freien Ende elastisch nach innen geschwenkt werden. Erreicht das Kameragehäuse dann die Funktionsstellung, so bewirkt die elastische Vorspannung der Rastelemente, dass die freien Enden der Rastelemente zurückschwenken und die Rastnasen die Rastkontur fixierend hintergreifen.

Bei Überwachungskameras muss die Bildung von Wassertropfen im Bereich des Kameraobjektivs unbedingt vermieden werden, da Wassertropfen die Objektabbildung massiv stören. Um dies zu gewährleisten ist es vorteilhaft, wenn die Öffnung des Befestigungsgehäuses von einer insbesondere geschlossen umlaufenden Abtropfkante begrenzt ist. Die Abtropfkante ist dabei so auszubilden, dass das Befestigungsgehäuse bei Anordnung des Kameragehäuses in der Funktionsstellung ein Stück weit über die Vorderseite des Kameragehäuses übersteht oder zumindest mit der Vorderseite des Kameragehäuses fluchtet. Im Ergebnis kann dadurch erreicht werden, dass Regenwasser oder Kondenswasser nachdem es an der Außenseite des Befestigungsgehäuses nach unten abgelaufen ist, an der Abtropfkante abtropft und nicht entlang der Vorderseite des Kameragehäuses zum Kameraobjektiv gelangt. Die erfindungsgemäße Schaffung der Möglichkeit zur Verstellung des Kameragehäuses in die Demontagestellung ermöglicht die Schaffung der Abtropfkante problemlos, da durch Verstellung des Kameragehäuses in die Demontagestellung die zur Demontage notwendige Griffkontur bzw. das Ausrasten der zur Fixierung verwendeten Fixierelemente realisiert werden kann.

Die äußere Gestalt des Befestigungsgehäuses ist grundsätzlich beliebig. Je nach Art der verwendeten Überwachungskameras kann das Befestigungsgehäuse in der Art eines runden, ovalen oder rechteckigen Aufputzgehäuses ausgebildet sein. Das Aufputzgehäuse selbst sollte durch Anbringung von Fixiermitteln an der Wandung eines Baukörpers festlegbar sein.

Die Demontage des Kameragehäuses aus dem Befestigungsgehäuse wird erheblich erleichtert, wenn die zur Verstellung des Kameragehäuses in die Demontagestellung notwendige Druckkraft gezielt an der richtigen Stelle der Vorderseite des Kameragehäuses aufgebracht wird. Um dies zu erleichtern ist es deshalb besonders vorteilhaft, wenn im Kameragehäuse eine entsprechende Markierung angebracht ist, die einen Druckpunkt markiert. Die Lage dieses Druckpunktes ist dabei dahingehend zu wählen, dass die zur Verstellung des Kameragehäuses von der Funktionsstellung in die Demontagestellung erforderliche Druckkraft möglichst gering ist. Falls die Demontage des Kameragehäuses durch Unbefugte erschwert werden soll, ist es vorteilhaft auf eine Markierung zu verzichten.

Eine Ausführungsform der Erfindung ist in den Zeichnungen schematisiert dargestellt und wird nachfolgend beispielhaft erläutert.

Es zeigen:
- **Fig. 1**: ein Kameragehäuse mit zugehörigem Befestigungsgehäuse im demontierten Zustand in perspektivischer Ansicht von unten;
- **Fig. 2**: das Befestigungsgehäuse mit dem demontierten Kameragehäuse gemäß Fig. 1 im Querschnitt;
- **Fig. 3**: das Befestigungsgehäuse mit dem darin in der Funktionsstellung montierten Kameragehäuse in perspektivischer Ansicht von unten;
- **Fig. 4**: das Befestigungsgehäuse mit dem darin in der Funktionsstellung montierten Kameragehäuse gemäß Fig. 3 im Querschnitt;
- **Fig. 5**: das Befestigungsgehäuse mit dem Kameragehäuse gemäß Fig. 3 nach Verschwenken des Kameragehäuses in die Demontagestellung in perspektivischer Ansicht von unten;
- **Fig. 6**: das Befestigungsgehäuse mit dem in die Demontagestellung verstellten Kameragehäuse gemäß Fig. 5 im Querschnitt;
- **Fig. 7**: ein an der Rastkontur des Befestigungsgehäuses eingerastetes Rastelement des Kameragehäuses im vergrößerten Querschnitt.

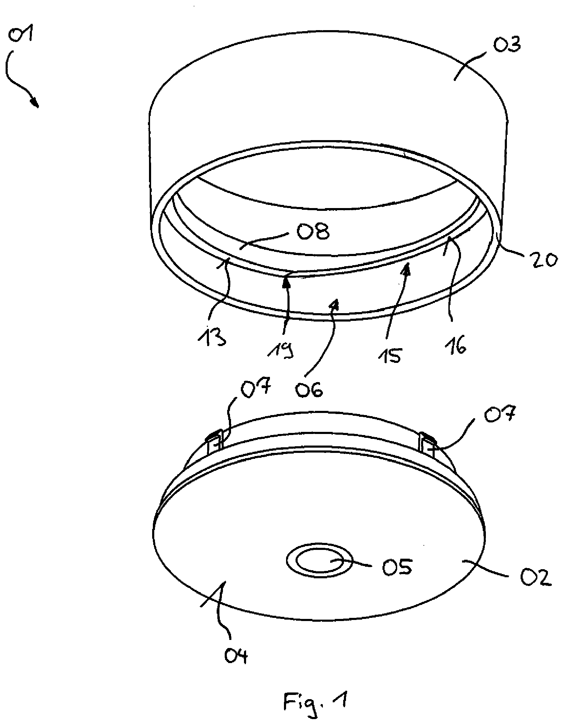

**Fig. 1** zeigt eine Überwachungskamera 01 mit einem Kameragehäuse 02 und einem Befestigungsgehäuse 03. An der Vorderseite 04 des Kameragehäuses 02 befindet sich das Objektiv 05 der Überwachungskamera 01. Die sonstigen Bestandteile der Überwachungskamera 01, insbesondere die im Kameragehäuse 02 angeordnete Kameraelektronik und die an der Rückseite des Kameragehäuses 02 vorgesehenen elektrischen Anschlusselemente, sind in den Zeichnungen nicht näher dargestellt und entsprechen dem vorbekannten Stand der Technik.

Das Befestigungsgehäuse 03 ist in der Art eines Aufputzgehäuses ausgebildet und kann mittels in den Zeichnungen nicht näher dargestellter Befestigungsmittel, beispielsweise Befestigungslaschen, an einem Baukörper unter Verwendung entsprechender Befestigungsschrauben festgelegt werden. Zur Montage des Kameragehäuses 02 an dem Befestigungsgehäuse 03 wird das Kameragehäuse 02 zunächst von außen durch die vom Baukörper wegweisende Öffnung 06 in das Befestigungsgehäuse 03 eingeführt und soweit durchgeschoben, bis die selbsttätig wirkenden Fixierelemente 07, die in der Art von Rastarmen mit Rastnasen ausgebildet sind, die funktionskomplementär ausgebildete Rastkontur am Anlagebund 08 hintergreifen und dadurch das Kameragehäuse in seiner Funktionsstellung am Befestigungsgehäuse fixieren.

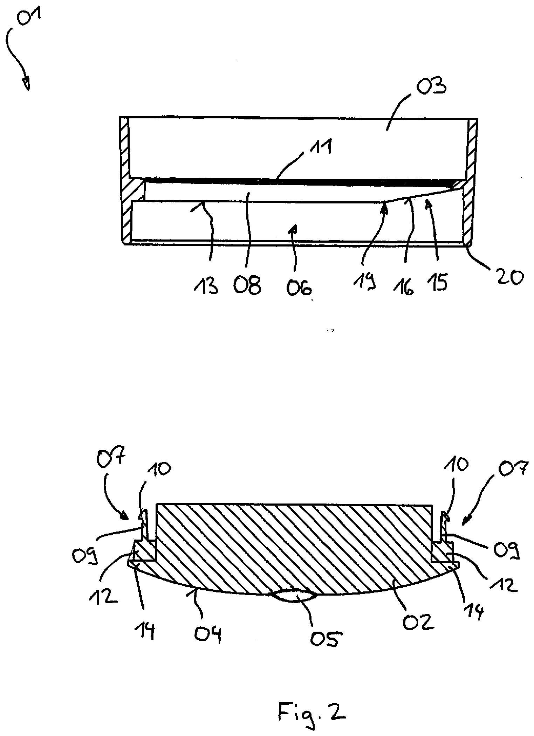

**Fig. 2** zeigt die Überwachungskamera 01 mit dem Befestigungsgehäuse 03 und dem demontierten Kameragehäuse 02 im schematisierten Querschnitt. Insbesondere sind dabei die im Inneren des Kameragehäuses 02 vorhandenen Funktionselemente, beispielsweise die Kameraelektronik und die Kameraanschlüsse, abgesehen von dem schematisiert dargestellten Objektiv 05, zeichnerisch nicht dargestellt. Die selbsttätig wirkenden Fixierelemente 07 sind als Rastarme 09 ausgebildet, an deren freien Ende jeweils eine Rastnase 10 angeformt ist. In der Funktionsstellung des Kameragehäuses 02 am Befestigungsgehäuse 03 hintergreifen die Rastnasen 10 die Rastkontur 11 an der von der Öffnung 06 wegweisenden Seite des Anlagebunds 08. Die Rastarme 09 sind dabei nicht einstückig an das Kameragehäuse 02 angeformt, sondern werden mittels eines Adapterrings 12 am Kameragehäuse 02 befestigt. Dadurch wird es möglich zur Bildung der Überwachungskamera 01 ein Standardkameragehäuse 02 ohne Rastarme zu verwenden, das durch Anbringung des Adapterrings 12 mit den Rastarmen 09 entsprechend ertüchtigt wird.

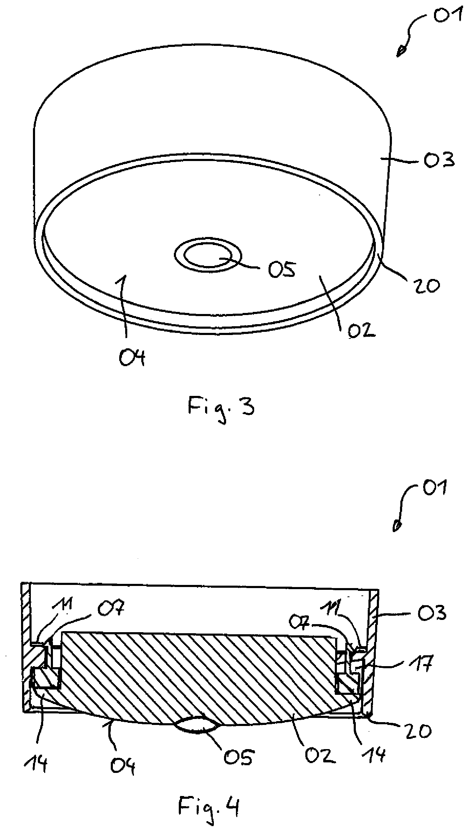

Wie aus Fig. 1 und Fig. 2 ersichtlich ist an der zur Öffnung 06 weisenden Seite des Anlagebunds 08 eine ebene Anlagefläche 13 gebildet, durch die eine erste Anlageebene definiert wird. In der Funktionsstellung des Kameragehäuses 02 im Befestigungsgehäuse 03 (siehe **Fig. 3** und **Fig. 4**) liegt der Blendrand 14 vermittelt über den Adapterring 12 mittelbar an dieser Anlagefläche 13 an. In dieser Stellung rasten dann auch die Rastnasen 10 der Rastarme 09 an der Rastkontur 11 alle ein und fixieren das Kameragehäuse 02 in der Funktionsstellung im Befestigungsgehäuse 03.

Wie weiter aus Fig. 1 und Fig. 2 ersichtlich weist der Anlagebund 08 auf einer Seite des Befestigungsgehäuses 03 einen Rücksprung 15 auf, der ebenfalls in der Art einer ebenen Anlagefläche 16 ausgebildet ist, die eine zweite Anlageebene definiert. Die beiden Anlageebenen der Anlagefläche 13 einerseits und der Anlagefläche 16 andererseits sind dabei mit einem Winkel von circa 10° gegeneinander geneigt. Der Winkel zwischen der Anlagefläche 13 einerseits und der Anlagefläche 16 anderseits kann je nach Gestaltung des Befestigungsgehäuses 03 bzw. des Kameragehäuses so gewählt werden, dass in der Demontagestellung eine Griffkontur zur Aufbringung einer manuellen Zugkraft zugänglich wird. Bevorzugt ist der Winkel kleiner als 10°. Soweit notwendig kann der Winkel aber auch größer gewählt werden.

Befindet sich das Kameragehäuse 02, wie in **Fig. 4** dargestellt, in seiner Funktionsstellung, so wird durch den Rücksprung 15 an einer Seite des Befestigungsgehäuses 03 ein Zwischenraum 17 realisiert. Dies bedeutet also, dass das Kameragehäuse 02 in seiner Funktionsstellung im Bereich des Rücksprungs 15 nicht an der Anlagefläche 13 des Anlagebunds 08 anliegt sondern durch den Zwischenraum 17 vom Anlagebund 08 getrennt wird.

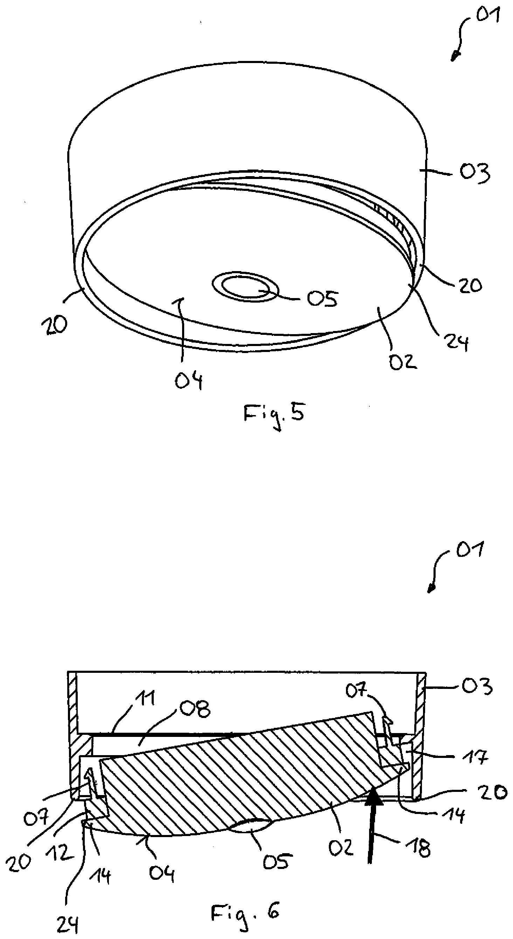

Soll nun das Kameragehäuse 02 aus dem Befestigungsgehäuse 03 demontiert werden, ist, wie in **Fig. 5** und **Fig. 6** schematisch dargestellt, vorzugehen. Um das Kameragehäuse in die in Fig. 5 und Fig. 6 dargestellte Demontagestellungen zu verstellen, muss im Bereich des Rücksprungs 15 an der Vorderseite 04 des Kameragehäuses 02 eine in Fig. 6 schematisiert dargestellte Druckkraft 18 aufgebracht werden. Die Druckkraft 18 kann aufgrund des Zwischenraums 17 zwischen Kameragehäuse 02 einerseits und Befestigungsgehäuse 03 andererseits zunächst nicht abgefangen werden, so dass die Druckkraft 18 eine Schwenkbewegung des Kameragehäuses 02 relativ zum Befestigungsgehäuse 03 bewirkt. Bei dieser Schwenkbewegung kippt das Kameragehäuse 02 um die Kippkante 19 (siehe Fig. 1 und Fig. 2) die durch die Schnittlinie zwischen den beiden Anlageebenen der Anlageflächen 13 und 16 definiert wird.

Zuletzt liegt das Kameragehäuse 02 dann vermittelt über den Adapterring 12 an der Anlagefläche 16 des Rücksprungs 15 an. In dieser Demontagestellung ist dann das gegenüberliegend angeordnete Fixierelement 07 ausgerastet. Außerdem steht der Blendrand 14 im Bereich des ausgerasteten Fixierelements 07 über die an der Unterseite des Befestigungsgehäuses 03 gebildeten Abtropfkante 20 über, so dass in diesem Bereich eine Griffkontur 24 zur Aufbringung einer manuellen Zugkraft auf das Kameragehäuse zugängig ist. Im Ergebnis kann der Bediener also in der in Fig. 5 und Fig. 6 dargestellten Demontagestellung das Kameragehäuse 02 problemlos aus dem Befestigungsgehäuse 03 herausziehen und demontieren.

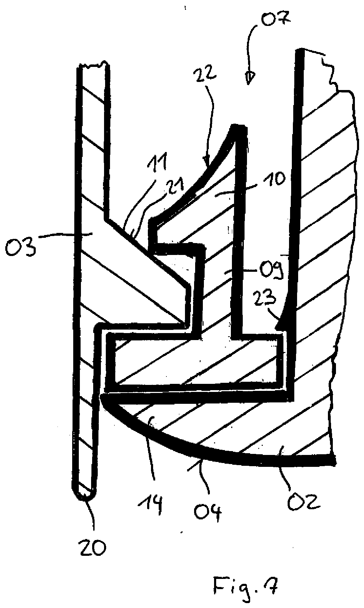

**Fig. 7** zeigt das Befestigungsgehäuse 03 mit dem Anlagebund 08 und das Kameragehäuse 02 mit dem Adapterring 12 und dem daran angeformten Fixiermittel 07 in vergrößerter Ansicht. Man erkennt, dass an der Rastkontur 11 des Anlagebunds 08 eine Anfasung 21 angeformt ist, die von der Rastnase 10 des Fixierelements 07 kraftschlüssig hintergriffen wird. Durch die Anfasung 21 wird das Ausrasten der Rastnase 10 bei der Verstellung des Kameragehäuses 02 in die Demontagestellung erheblich erleichtert. Alternativ zu der dargestellten Ausführungsform ist es auch denkbar den Anlagebund 08 ohne Anfasung auszubilden und stattdessen eine Anfasung an der Rastnase 10 vorzusehen. Auch ist es denkbar am Anlagebund 08 und an der Rastnase 10 eine Anfasung vorzusehen.

Je nach Wahl der Neigung der Anfasung 21 kann die zum Ausrasten der Rastnase 10 bei der Verstellung des Kameragehäuses 02 in die Demontagestellung notwendige Druckkraft 18 verändert werden. Außerdem ist es möglich die bei der Verstellung des Kameragehäuses 02 in die Demontagestellung notwendige Druckkraft 18 durch Änderung der Lage der Kippkante zu beeinflussen. Denn abhängig von der Lage der Kippkante vergrößert bzw. verkleinert sich der Hebelarm, mit dem die Druckkraft 18 auf das Kameragehäuse 02 wirkt.

Außerdem ist am freien Ende des Rastarms 09 eine Anlaufschräge 22 vorgesehen, die das Einführen der Fixierelemente 07 in die Öffnung 06 vereinfacht. Alternativ zu der dargestellten Ausführungsform ist es auch denkbar am freien Ende des Rastarms 09 keine Anlaufschräge auszubilden und stattdessen eine Anlaufschräge an der Vorderseite des Anlagebunds 08 vorzusehen.

Der Adapterring 12 wird an einem Rastvorsprung 23 des Kameragehäuses 02 eingerastet und fixiert.

## Patentansprüche

1. Überwachungskamera (01) zur Installation an einem Baukörper
mit
einem Kameragehäuse (02),
einem Objektiv (05) an der Vorderseite (04) des Kameragehäuses (02),
einer Kameraelektronik im Kameragehäuse (02),
zumindest einem elektrischen Anschlusselement an der Rückseite des Kameragehäuses (02),
einem Befestigungsgehäuse (03), das am Baukörper befestigbar ist und in dem das Kameragehäuse (02) lösbar fixiert werden kann, wobei das Befestigungsgehäuse (03) eine vom Baukörper wegweisende Öffnung (06) aufweist, durch die das Kameragehäuse (02) in das Befestigungsgehäuse (03) eingeführt werden kann,
wobei am Kameragehäuse (02) und/oder im Befestigungsgehäuse (03) zumindest ein selbsttätig wirkendes Fixierelement (07) vorgesehen ist, mit dem das Kameragehäuse (02) in einer definierten Funktionsstellung lösbar im Befestigungsgehäuse (03) fixiert werden kann,
und wobei das Kameragehäuse (02) durch Aufbringung einer Kraft (18) von der Funktionsstellung in eine Demontagestellung verstellbar ist,und wobei in der Demontagestellung zumindest ein Fixierelement (07) außer Eingriff gebracht ist und/oder an der Außenseite des Kameragehäuses (02) eine Griffkontur (24) zur Aufbringung einer manuellen Zugkraft zugänglich gemacht ist,
**dadurch gekennzeichnet,**
**dass** am Innenumfang des Befestigungsgehäuses (03) ein geschlossener oder unterbrochener Anlagebund (08) vorgesehen ist, wobei die zur Öffnung (06) des Befestigungsgehäuses (03) weisende Seite des Anlagebundes (08) eine Anlageebene definierende Anlagefläche (13) aufweist, an der das Kameragehäuse (02) in der Funktionsstellung zumindest abschnittsweise mit einem radial überstehenden Blendrand (14), mittelbar oder unmittelbar, zur Anlage kommen kann, und wobei der Anlagebund (08) einen zur Öffnung (06) des Befestigungsgehäuses (03) weisenden Rücksprung (15) aufweist, und wobei der Blendrand (14) des Kameragehäuses (02) in der Demontagestellung zumindest abschnittsweise an der zur Öffnung (06) des Befestigungsgehäuses (03) weisenden Seite des Rücksprungs (15) zur Anlage kommen kann, und wobei der Rücksprung (15) eine zweite Anlageebene definiert, an der der Blendrand (14) des Kameragehäuses (02) in der Demontagestellung zumindest abschnittsweise zur Anlage kommt, wobei die zweite Anlageebene winkelig gegenüber der ersten Anlageebene geneigt ist, und wobei die Schnittlinie zwischen der ersten Anlageebene und der zweiten Anlageebene eine Kippkante (19) definiert, um die das Kameragehäuse (02) bei Verstellung zwischen Funktionsstellung und Demontagestellung gekippt werden kann.

2. Überwachungskamera nach Anspruch 1,
**dadurch gekennzeichnet,**
**dass** als selbsttätig wirkende Fixierelemente an der Rückseite des Kameragehäuses zumindest zwei schwenkbar gelagerte Haltearme vorgesehen sind, wobei die Haltearme zwischen einer radial über das Kameragehäuse überstehenden Fixierstellung und einer zurückgeschwenkten Montagestellung verschwenkbar sind, und wobei die Haltearme mit einer Vorspannkraft elastisch vorgespannt sind, und wobei die Vorspannkraft die Haltearme jeweils in die radial überstehende Fixierstellung drückt, um das Kameragehäuse im Befestigungsgehäuse lösbar fixieren zu können.

3. Überwachungskamera nach Anspruch 1,
**dadurch gekennzeichnet,**
**dass** als selbsttätig wirkende Fixierelemente (07) am Kameragehäuse (02) und/oder im Befestigungsgehäuse Rastelemente vorgesehen sind, wobei die Rastelemente bei Anordnung des Kameragehäuses (02) in der Funktionsstellung im Befestigungsgehäuse (03) eine gegenüberliegende Rastkontur (11) form- und/oder kraftschlüssig hintergreifen.

4. Überwachungskamera nach Anspruch 3,
**dadurch gekennzeichnet,**
**dass** die Rastelemente als elastisch federnd gelagerte Rastarme (09) ausgebildet sind, wobei am freien Ende der Rastarme (09) eine Rastnase (10) vorgesehen ist, die bei Anordnung des Kameragehäuses (02) in der Funktionsstellung im Befestigungsgehäuse (03) eine gegenüberliegende Rastkontur (11) form- und/oder kraftschlüssig hintergreifen kann.

5. Überwachungskamera nach Anspruch 4,
**dadurch gekennzeichnet,**
**dass** die Rastarme einstückig an das Kameragehäuse oder an das Befestigungsgehäuse angeformt sind, insbesondere einstückig aus Kunststoff angespritzt sind.

6. Überwachungskamera nach Anspruch 4,
**dadurch gekennzeichnet,**
**dass** die Rastarme (09) an einem Adapterring (12) angeformt sind, wobei der Adapterring (12) am Kameragehäuse (02) oder am Befestigungsgehäuse festlegbar, insbesondere an einem Rastvorsprung (23) einrastbar, ist.

7. Überwachungskamera nach einem der Ansprüche 1 bis 6,
**dadurch gekennzeichnet,**
**dass** der Anlagebund (08) am Innenumfang des Befestigungsgehäuses (03) einen geschlossenen Ring bildet, wobei die am Kameragehäuse (02) angeordneten Rastelemente den Anlagebund (08) zur Fixierung des Kameragehäuses (02) in der Funktionsstellung an der von der Öffnung (06) des Befestigungsgehäuses (03) wegweisenden Seite form- und/oder kraftschlüssig hintergreifen.

8. Überwachungskamera nach einem der Ansprüche 1 bis 7,
**dadurch gekennzeichnet,**
**dass** an der von der Öffnung (06) des Befestigungsgehäuses wegweisenden Seite des Anlagebunds (08) und/oder an den Rastnasen (10) der Rastarme (09) eine Abrundung oder Anfasung (21) vorgesehen ist, wobei die am Kameragehäuse (02) angeordneten Rastarme (09) den Anlagebund (08) zur Fixierung des Kameragehäuses in der Funktionsstellung mit den Rastnasen (10) kraftschlüssig hintergreifen.

9. Überwachungskamera nach einem der Ansprüche 4 bis 8,
**dadurch gekennzeichnet,**
**dass** am freien Ende der Rastarme (09) und/oder am Anlagebund (08) eine Anlaufschräge (22) vorgesehen ist, die beim Einführen des Kameragehäuses (02) in das Befestigungsgehäuse (03) ein Abgleiten der Rastarme (09) am Anlagebund (08) ermöglicht und dabei eine radial nach innen gerichtete Kraft auf das freie Ende der Rastarme (09) bewirkt.

10. Überwachungskamera nach einem der Ansprüche 1 bis 9,
**dadurch gekennzeichnet,**
**dass** die Öffnung (06) des Befestigungsgehäuses (03) von einer insbesondere geschlossen umlaufenden Abtropfkante (20) begrenzt ist, wobei die Abtropfkante (20) des Befestigungsgehäuses (03) bei Anordnung des Kameragehäuses (02) in der Funktionsstellung ein Stück weit über den Blendrand (14) des Kameragehäuses übersteht oder mit der Vorderseite des Blendrands (14) fluchtet.

11. Überwachungskamera nach einem der Ansprüche 1 bis 10,
**dadurch gekennzeichnet,**
**dass** das Befestigungsgehäuse (03) in der Art eines runden, ovalen oder rechteckigen Aufputzgehäuses ausgebildet ist, das durch Anbringung von Fixiermitteln an der Wandung eines Baukörpers festlegbar ist.

12. Überwachungskamera nach einem der Ansprüche 1 bis 11,
**dadurch gekennzeichnet,**
**dass** am Befestigungsgehäuse und/oder am Kameragehäuse eine Markierung angebracht ist, die einen Druckpunkt markiert, an dem die zur Verstellung des Kameragehäuses von der Funktionsstellung in eine Demontagestellung notwendige Kraft (18) aufgebracht werden kann.

13. Verwendung eines Befestigungsgehäuses (03) zur Installation einer Überwachungskamera (01) gemäß einem der Ansprüche 1 bis 12 mit einem Kameragehäuse (02) an einem Baukörper.

## Claims

1. A surveillance camera (01) for installation on a building structure, said surveillance camera comprising
a camera housing (02),
an objective (05) on the front side (04) of the camera housing (02) camera electronics in the camera housing (02),
at least one electric connecting element at the rear side of the camera housing (02),
a mounting housing (03) mountable to the building structure and in which the camera housing (02) can be detachably secured,
wherein the mounting housing (03) comprises an opening (06) pointing away from the building structure, through which opening the camera housing (02) can be inserted into the mounting housing (03),
wherein at least one automatically active securing element (07) is provided on the camera housing (02) and/or in the mounting housing (03), with which securing element the camera housing (02) can be detachably secured in the mounting housing (03) in a defined functional position,
and wherein the camera housing (02) is adjustable from the functional position into a dismantling position by application of a force (18),
and wherein in the dismantling position at least one securing element (07) is disengaged and/or a grip contour (24) is made accessible on the outside of the camera housing (02) for the application of a manual traction force,
**characterised in that**
a closed or disrupted collar (08) is provided at the inner circumference of the mounting housing (03), wherein the side of the collar (08) pointing towards the opening (06) of the mounting housing (03) comprises an abutment surface (13) defining an abutment plane, against which the camera housing (02) in the functional position can abut directly or indirectly, at least in sections, with a radially protruding cover rim (14), and wherein the collar (08) comprises a recess (15) pointing towards the opening (06) of the mounting housing (03), and wherein the cover rim (14) of the camera housing (02) in the dismantling position can abut at least in sections against the side of the recess (15) pointing to the opening (06) of the mounting housing (03),
and wherein the recess (15) defines a second abutment plane,
against which the cover rim (14) of the camera housing (02) in the dismantling position abuts at least in sections, wherein the second abutment plane is inclined angularly relative to the first abutment plane, and wherein the intersection line between the first abutment plane and the second abutment plane defines a tilt edge (19) around which the camera housing (02) can be tilted when being adjusted between the functional position and the dismantling position.

2. The surveillance camera according to Claim 1,
**characterised in that**
at least two swivelably mounted supporting arms are provided as automatically active securing elements at the rear side of the camera housing, wherein said supporting arms are swivelable between a securing position radially protruding over the camera housing and a back-swiveled assembly position, and wherein the supporting arms are elastically pre-stressed with a pre-tension force, and wherein the pre-tension force pushes each of the supporting arms in the radially protruding securing position in order to be able to detachably secure the camera housing in the mounting housing.

3. The surveillance camera according to Claim 1,
**characterised in that**
locking elements are provided as automatically active securing elements (07) on the camera housing (02) and/or in the mounting housing, wherein the locking elements engage behind an opposing locking contour (11) in a form-fitting and/or force-fitting manner when the camera housing (02) is arranged in the functional position in the mounting housing (03).

4. The surveillance camera according to Claim 3,
**characterised in that**
the locking elements are formed as resiliently mounted locking arms (09), wherein a locking pin (10) is provided at the free ends of the locking arms (09), said locking pin (10) being able to engage behind an opposing locking contour (11) in a form-fitting and/or force-fitting manner when the camera housing (2) is arranged in the functional position in the mounting housing (03).

5. The surveillance camera according to Claim 4,
**characterised in that**
the locking arms are formed integrally with the camera housing or the mounting housing and in particular are injected in one piece from plastic material.

6. The surveillance camera according to Claim 4,
**characterised in that**
the locking arms (09) are formed on an adapter ring (12), wherein the adapter ring (12) can be secured on the camera housing (02) or
the mounting housing, in particular can be engaged in a locking protuberance (23).

7. The surveillance camera according to any one of the Claims 1 through 6,
**characterised in that**
the collar (08) forms a closed ring at the inner circumference of the mounting housing (03), wherein the locking elements arranged on the camera housing (02) engage behind the collar (08) in a form-fitting and/or force-fitting manner at the side pointing away from the opening (06) of the mounting housing (03) for securing the camera housing (02) in the functional position.

8. The surveillance camera according to any one of the Claims 1 through 7,
**characterised in that**
a rounding or bevel (21) is provided at the side of the collar pointing away from the opening (06) of the mounting housing (03) and/or at the locking pins (10) of the locking arms (09), wherein the locking arms (09) arranged on the camera housing (02) engage behind the collar (08) in a force-fitting manner with the locking pins (10), for securing the camera housing in the functional position.

9. The surveillance camera according to any one of the Claims 4 through 8,
**characterised in that**
a starting slope (22) is provided at the free ends of the locking arms (09) and/or at the collar (08), said starting slope (22) enabling a sliding of the locking arms (09) off the collar (08) when inserting the camera housing (02) into the mounting housing (03), thus causing a force directed radially inwards to act on the free ends of the locking arms (09).

10. The surveillance camera according to any one of the Claims 1 through 9,
**characterised in that**
the opening (06) of the mounting housing (03) is skirted by a drip edge (20) which in particular has a closed circumference, wherein the drip edge (20) of the mounting housing (03) protrudes to some extent over the cover rim (14) of the camera housing or is aligned flush with the front side of the cover rim (14) when the camera housing (02) is arranged in the functional position.

11. The surveillance camera according to any one of the Claims 1 through 10,
**characterised in that**
the mounting housing (03) is embodied in the type of a surface-mounted housing shaped either round, oval or rectangular, said surface-mounted housing being securable to the wall of a building structure by means of affixing securing elements.

12. The surveillance camera according to any one of the Claims 1 through 11,
**characterised in that**
a marking is made on the mounting housing and/or the camera housing, which marks a pressure point onto which the force (18) required for adjusting the camera housing from the functional position into the dismantling position can be applied.

13. Use of a mounting housing (03) for the installation of a surveillance camera (01) according to any one of the Claims 1 through 12 with a camera housing (02) on a building structure.

## Revendications

1. Caméra de surveillance (01) pour être installée sur un corps de bâtiment, ladite caméra de surveillance comprenant
un boîtier de caméra (02),
un objectif (05) sur la face (04) avant du boîtier de caméra (02),
une électronique de caméra dans le boîtier de caméra (02),
au moins un élément de connexion électrique sur la face arrière du boîtier de caméra (02),
un boîtier de montage (03) qui peut être monté au corps de bâtiment et dans lequel le boîtier de caméra (02) peut être fixé de manière amovible,
le boîtier de montage (03) comprenant une ouverture (06) détournée du corps de bâtiment, le boîtier de caméra (02) pouvant être inséré dans le boîtier de montage (03) à travers ladite ouverture (06),
au moins un élément de fixation (07) agissant automatiquement étant prévu sur le boîtier de caméra (02) et/ou dans le boîtier de montage (03), le boîtier de caméra (02) pouvant être fixé de manière amovible dans le boîtier de montage (03) dans une position fonctionnelle définie au moyen dudit élément de fixation,
et le boîtier de caméra (02) pouvant être ajusté à partir de la position fonctionnelle dans une position de démontage en appliquant une force (18),
et au moins un élément de fixation (07) étant désengagé dans la position de démontage et/ou un contour de poignée (24) étant rendu accessible sur la face extérieure du boîtier de caméra (02) pour appliquer une force de traction manuelle,
**caractérisée en ce qu'**
une collerette (08) fermée ou interrompue est prévue à la circonférence intérieure du boîtier de montage (03), le côté de la collerette (08) tourné vers l'ouverture (06) du boîtier de montage (03) comprenant une surface d'appui (13) définissant un plan d'appui, contre lequel le boîtier de caméra (02) dans la position fonctionnelle peut venir en appui directement ou indirectement, au moins par sections, avec un bord de couvercle (14) en saillie radiale, et ladite collerette (08) comprenant un évidement (15) tourné vers l'ouverture (06) du boîtier de montage (03), et ledit bord de couvercle (14) du boîtier de caméra (02) pouvant venir en appui, au moins par sections, contre le côté de l'évidement (15) tourné vers l'ouverture (06) du boîtier de montage (03) dans la position de démontage,
et ledit évidement (15) définissant un deuxième plan d'appui, contre lequel le bord de couvercle (14) du boîtier de caméra (02) vient en appui, au moins par sections, dans la position de démontage, ledit deuxième plan d'appui étant incliné de manière angulaire par rapport au premier plan d'appui, et la ligne d'intersection entre le premier plan d'appui et le deuxième plan d'appui définissant un bord de basculement (19) autour duquel le boîtier de caméra (02) peut être basculé quand le boîtier de caméra est ajusté entre la position fonctionnelle et la position de démontage.

2. Caméra de surveillance selon la revendication 1,
**caractérisée en ce qu'**
au moins deux bras de support montés de manière pivotante sont prévus en tant qu'éléments de fixation agissant automatiquement sur la face arrière du boîtier de caméra, lesdits bras de support pouvant être pivotés entre une position de fixation en saillie radiale par rapport au boîtier de caméra et une position de montage pivotée vers l'arrière, et lesdits bras de support sont précontraints de manière élastique au moyen d'une force de précontrainte, ladite force de précontrainte poussant chacun des bras de support dans la position de fixation en saillie radiale pour pouvoir fixer le boîtier de caméra dans le boîtier de montage de manière amovible.

3. Caméra de surveillance selon la revendication 1,
**caractérisée en ce que**
des éléments de verrouillage sont prévus sur le boîtier de caméra (02) et/ou dans le boîtier de montage en tant qu'éléments de fixation (07) agissant automatiquement, lesdits éléments de verrouillage venant en prise derrière un contour de verrouillage (11) opposant par complémentarité de forme et/ou de force, quand le boîtier de caméra (02) est disposé dans la position fonctionnelle dans le boîtier de montage (03).

4. Caméra de surveillance selon la revendication 3,
**caractérisée en ce que**
les éléments de verrouillage sont formés en tant que bras de verrouillage (09) montés de manière élastique, un ergot de verrouillage (10) étant prévu aux extrémités libres des bras de verrouillage (09), ledit ergot de verrouillage (10) pouvant venir en prise derrière un contour de verrouillage (11) opposant par complémentarité de forme et/ou de force, quand le boîtier de caméra (2) est disposé dans la position fonctionnelle dans le boîtier de montage (03).

5. Caméra de surveillance selon la revendication 4,
**caractérisée en ce que**
les bras de verrouillage sont formés d'un seul tenant avec le boîtier de caméra ou avec le boîtier de montage et en particulier sont injectés d'un seul tenant en matière plastique.

6. Caméra de surveillance selon la revendication 4,
**caractérisée en ce que**
les bras de verrouillage (09) sont formés sur un anneau adaptateur (12), ledit anneau adaptateur (12) pouvant être fixé au boîtier de caméra (02) ou au boîtier de montage, en particulier pouvant être verrouillé dans une saillie de verrouillage (23).

7. Caméra de surveillance selon l'une quelconque des revendications 1 à 6,
**caractérisée en ce que**
la collerette (08) forme un anneau fermé à la circonférence intérieure du boîtier de montage (03), les éléments de verrouillage disposés au boîtier de caméra (02) venant en prise derrière la collerette (08) par complémentarité de forme et/ou de force, sur le côte détourné de l'ouverture (06) du boîtier de montage (03), pour fixer le boîtier de caméra (02) dans la position fonctionnelle.

8. Caméra de surveillance selon l'une quelconque des revendications 1 à 7,
**caractérisée en ce qu'**
un arrondi ou un chanfrein (21) est prévu sur le côté de la collerette (08) détourné de l'ouverture (06) du boîtier de montage (03) et/ou aux ergots de verrouillage (10) des bras de verrouillage (09), lesdits bras de verrouillage (09) disposés au boîtier de caméra (02) venant en prise derrière la collerette (08) par complémentarité de force avec les ergots de verrouillage, pour fixer le boîtier de caméra dans la position fonctionnelle.

9. Caméra de surveillance selon l'une quelconque des revendications 4 à 8,
**caractérisée en ce qu'**
une pente de départ (22) est prévue à l'extrémité libre des bras de verrouillage (09) et/ou à la collerette (08), ladite pente de départ (22) permettant que les bras de verrouillage (09) glissent de la collerette (08), quand le boîtier de caméra (02) est inséré dans le boîtier de montage (03), ce faisant provoquant qu'une force orientée radialement vers l'intérieur agisse sur l'extrémité libre des bras de verrouillage (09).

10. Caméra de surveillance selon l'une quelconque des revendications 1 à 9,
**caractérisée en ce que**
l'ouverture (06) du boîtier de montage (03) est limitée par un bord de goutte (20) qui en particulier a une circonférence fermée, ledit bord de goutte (20) du boîtier de montage (03) étant en saille, dans une certaine mesure, par rapport au bord de couvercle (14) du boîtier de caméra ou étant aligné avec la face avant du bord de couvercle (14), quand le boîtier de caméra (02) est disposé dans la position fonctionnelle.

11. Caméra de surveillance selon l'une quelconque des revendications 1 à 10,
**caractérisée en ce que**
le boîtier de montage (03) est réalisé en tant que boîtier monté en surface en forme ronde, ovale ou rectangulaire, ledit boîtier monté en surface pouvant être fixé au mur d'un corps de bâtiment en fixant des éléments de fixation.

12. Caméra de surveillance selon l'une quelconque des revendications 1 à 11,
**caractérisée en ce qu'**
une marque est apposée au boîtier de montage et/ou au boîtier de caméra, ladite marque marquant un point de pression sur lequel la force (18) nécessaire pour ajuster le boîtier de caméra à partir de la position fonctionnelle dans la position de démontage peut être appliquée.

13. Utilisation d'un boîtier de montage (03) pour installer une caméra de surveillance (01) selon l'une quelconque des revendications 1 à 12 ayant un boîtier de caméra (02) à un corps de bâtiment.
